Europäisches Patentamt

European Patent Office

Office européen des brevets

(19)

(11) **EP 1 052 558 B1**

(12) **EUROPÄISCHE PATENTSCHRIFT**

(45) Veröffentlichungstag und Bekanntmachung des Hinweises auf die Patenterteilung:
**07.08.2002 Patentblatt 2002/32**

(51) Int Cl.$^7$: **G05B 13/04**

(21) Anmeldenummer: **99810428.5**

(22) Anmeldetag: **14.05.1999**

(54) **Verfahren und Einrichtung zur Zustandsschätzung**

Method and device for estimation of condition

Procédé et dispositif d'estimation d' état

(84) Benannte Vertragsstaaten:
**DE GB**

(43) Veröffentlichungstag der Anmeldung:
**15.11.2000 Patentblatt 2000/46**

(73) Patentinhaber: **ABB RESEARCH LTD.**
**8050 Zürich (CH)**

(72) Erfinder: **Poncet, Andreas, Dr.**
**8032 Zürich (CH)**

(74) Vertreter: **ABB Patent Attorneys**
**c/o ABB Schweiz AG**
**Brown Boveri Strasse 6**
**5400 Baden (CH)**

(56) Entgegenhaltungen:
EP-A- 0 800 125          US-A- 3 805 032
US-A- 4 893 262          US-A- 5 369 345
US-A- 5 682 309

- DARUACH ET AL: "RECURSIVE STATE ESTIMATION FOR LINEAR DYNAMIC SYSTEMS UNDER ALGEBRAIC CONSTRAINTS" ELECTRONICS LETTERS, Bd. 27, Nr. 10, 9. Mai 1991 (1991-05-09), Seiten 803-804, XP002124981 UK
- V.KURKIN: "ALGORITHM FOR ADAPTIVE ESTIMATION OF THE LOAD IN A COMPUTER SYSTEM" AUTOMATIC CONTROL AND COMPUTER SCIENCES, Bd. 18, Nr. 4, 1984, Seiten 1-7, XP000856834 USA

- ZASADZINSKI M ET AL: "ESTIMATION DE L'ETAT POUR UNE CLASSE DE SYSTEMES SINGULIERS. APPLICATION A LA VALIDATION DE DONNEES" AUTOMATIQUE-PRODUCTIQUE INFORMATIQUE INDUSTRIELLE,FR,PARIS, Bd. 26, Nr. 2, Seite 107-124 XP000856658 ISSN: 0296-1598
- A.KRETSOVALIS: "EFFECT OF REDUNDANCY ON ESTIMATION ACCURACY IN PROCESS DATA RECONCILIATION" CHEMICAL ENGINEERING SCIENCE, Bd. 42, Nr. 9, 1987, Seiten 2115-2121, XP000856678 UK
- P.HANLON ET AL: "CHARACTERIZATION OF KALMAN FILTER RESDUALS IN THE PRESENCE OF MISMODELING" PROCEEDINGS OF THE 37TH CONFERENCE ON DECISION AND CONTROL, Bd. 2, 16. Dezember 1998 (1998-12-16), Seiten 1254-1259, XP002124984 USA
- Y.MOON ET AL: "DESIGN OF RELIBLE MEASUREMENT SYSTEM FOR STATE ESTIMATION" IEEE TRANS.POWER SYST., Bd. 3, Nr. 3, August 1998 (1998-08), Seiten 830-836, XP000857124 USA
- S.BOUSGHIRI ET AL: "FAULT DETECTION USING STATE ESTIMATION.APPLICATION TO AN ELECTROMECHANICAL PROCESS" PROCEEDINGS OF THE 34TH IEEE CONFERENCE ON DECISION AND CONTROL, Bd. 3, - 13. Dezember 1995 (1995-12-13) Seiten 2397-2402, XP002124985 USA
- WOJSZNIS ET AL: 'PREDICTIVE CONTROL IMPLEMENTATION INTO DCS CONTROLLER', ADVANCES IN INSTRUMENTATION AND CONTROL, 49(1994), Teil 3, Seiten 767-774, XP 000508987 USA

• **GENDRON ET AL: 'CONSTRAINT MODEL PREDICTIVE CONTROL OF LOW ORDER PLANTS BASED ON MODEL WEIGHTING ADAPTATION', JOURNAL A, 35(1994), No. 3, Seiten 18-25, Antwerpen, BE**

**Beschreibung**

**Technisches Gebiet**

Die Erfindung bezieht sich auf das Gebiet der Regelungstechnik. Sie bezieht sich auf Verfahren und eine Einrichtung zur Zustandsschätzung gemäss dem Oberbegriff der Patentansprüche 1 und 13.

**Stand der Technik**

Die Verfolgung des zeitlichen Verhaltens eines technischen Systems, beispielsweise einer Produktionsanlage, eines Kraftwerkes oder einer elektromechanischen Einrichtung, erfordert eine andauernde Bestimmung von Systemgrössen, beispielsweise Temperaturen, Drücke, Massenströme, Leistungen. Anhand solcher Grössen und anhand von Werten von Steuereingängen kann das System geregelt und das zukünftige Verhalten des Systems vorausgesagt, optimiert und in sicheren Grenzen gehalten werden.

Die Messung sämtlicher benötigten Systemgrössen ist jedoch technisch oder wirtschaftlich nicht möglich oder sinnvoll.

Deshalb müssen bestimmte Systemgrössen anhand von Messungen anderer Grössen geschätzt werden. Aufgrund von Messrauschen, Variationen in den Sensoren und nicht beobachtbaren Störungen sind alle Schätzungen mit zufälligen Fehlern behaftet. Die Verfolgung und Voraussage des Systemverhaltens, wie auch die Regelung und Steuerung des Systems, basieren auf diesen fehlerbehafteten Schätzungen.

Die Schätzung von Systemgrössen wird im Allgemeinen mit einem Kalmanfilter durchgeführt. Falls das System eine lineare Dynamik aufweist, bestimmt das Filter aus den Messungen einen Punkt im Raum der Systemgrössen. Da jedoch die im System wirksamen physikalischen Gesetzmässigkeiten, beispielsweise Massen- und Energieerhaltungssätze, nicht alle linear sind, werden sie durch die Schätzung des Filters nicht erfüllt. Dadurch sind die Schätzungen für eine genaue Überwachung nicht von ausreichender Qualität.

Deshalb existieren Verfahren zur. Abstimmung von Messdaten, auch Data Reconciliation-Verfahren genannt, die garantieren, dass zumindest die Messdaten vorgegebene physikalische Gesetzmässigkeiten oder Randbedingungen erfüllen.

Im Folgenden wird der Begriff "Zustand" nicht im engeren Sinne der dynamischen Systemtheorie verwendet, also nicht nur für die minimale Information zur Beschreibung des zeitlichen Systemverhaltens, sondern im weiteren Sinne für alle Systemgrössen, die von Interesse sind.

Es soll also ein Wert $x$ eines $d$-dimensionalemn Zustandsvektors $X$ eines Systems bestimmt werden. Meist ist die in diesem Zustand enthaltene Information aufgrund physikalischer Zusammenhänge im System redundant. Diese Redundanz entspricht einem Satz von Randbedingungen entsprechend der $c$-dimensionalen Gleichung

$$g(x) = 0. \tag{1}$$

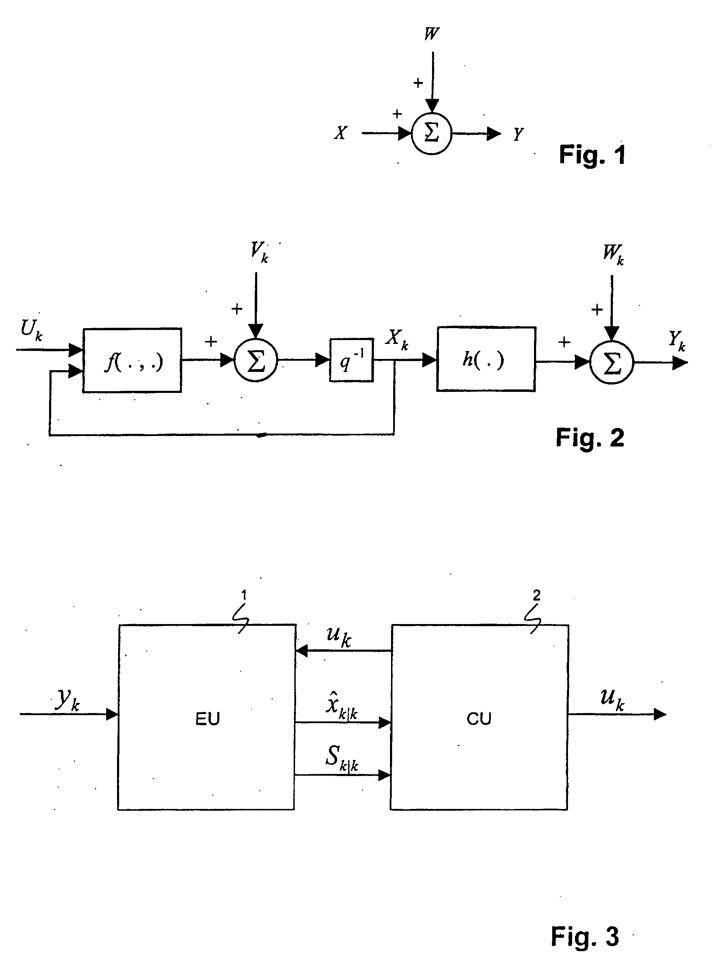

Eine Messung $Y$ des Zustands $X$ sei durch ein unabhängiges additives Rauschen $W$ gestört. Dieses repräsentiert beispielsweise Sensorrauschen. Diese Zusammenhänge werden durch Figur 1 wiedergegeben. Es ist also

$$Y = X + W. \tag{2}$$

Hier und im Folgenden bezeichnen Grossbuchstaben $W$, $X$, $Y$ Zufallsvektoren, das heisst Vektoren von Zufallsvariablen, Kleinbuchstaben $w$, $x$, $y$ hingegen Werte, die diese Zufallsvektoren annehmen.
Wegen den Randbedingungen (1) erfüllt die priore Wahrscheinlichkeitsdichte von $X$

$$p_X(x) \propto \delta(g(x)),$$

wobei $\delta(\cdot)$ die Diracverteilung ist. Weiter ist, da $X$ und $W$ als unabhängig angenommen wurden, die Likelihood-Funktion

$$p_{Y|X}(y|x) = p_W(y-x), \tag{3}$$

wobei $p_W(\cdot)$ die Wahrscheinlichkeitsdichte des Messrauschens ist. Gemäss dem Bayes-Theorem ist die posteriore Wahrscheinlichkeitsdichte von $X$, gegeben eine Messung, bei der die Zufallsvariable $Y$ den Wert $y$ annimmt, also mit $Y = y$, gegeben durch

$$p_{X|Y}(x \mid y) = \frac{p_X(x)p_W(y-x)}{\int_{-\infty}^{\infty} p_X(x)p_W(y-x)dx} \cdot \tag{4}$$

Die maximale a posteriori (MAP) Schätzung, das heisst, der wahrscheinlichste Wert von $X$, gegeben dass $Y=y$, ist somit

$$\begin{aligned}\hat{x}_{\mathrm{MAP}}(y) &\triangleq \underset{\{x|g(x)=0\}}{\arg\max}\ p_X(x)p_W(y-x) \\ &= \underset{\{x|g(x)=0\}}{\arg\min} -\log p_X(x) - \log p_W(y-x)\end{aligned} \tag{5}$$

Es sei beispielsweise die Messung modelliert durch additives Gauss'sches Rauschen mit Mittelwert Null und unkorrelierten Komponenten, also

$$W \sim N(0;\Sigma_W), \tag{6}$$

wobei die Kovarianzmatrix gleich

$$\Sigma_W = \mathrm{diag}(\sigma_1^2,...,\sigma_m^2) \tag{7}$$

ist. Unter Annahme einer konstanten prioren Dichte (uninformative prior) $p_X(\cdot)$ für $X$ ergibt sich aus (1) die Maximum Likelihood (ML) Schätzung, $\hat{x}_{ML}(y)$ als Lösung von

$$\min_x (y-x)^{\mathrm{T}} \Sigma_W^{-1}(y-x) = \min_x \sum_{i=1}^m (y_i - x_i)^2 / \sigma_i^2 \tag{8}$$

unter der Randbedingung

$$g(x) = 0 . \tag{9}$$

Dies entspricht dem klassischen "data reconciliation"-Verfahren, wie es in beispielsweise aus dem Artikel "Data Reconciliation, Progress and Challenge"; Cameron M. Crowe; J.Proc. Cont. Vol. 6, No.2/3, pp89-98, 1996; Elsevier Science Ltd, bekannt ist. Die Qualität des Verfahrens ist jedoch für gewisse Anwendungen nicht ausreichend.
Darouach et al., "Recursive State Estimation for Linear Dynamic Systems under Algebraic Constraints", Electronic Letters, Bd. 27, Nr. 10, 9. Mai 1991, Seiten 803-804, UK, zeigt eine Zustandsschätzung, welche einen Zustand anhand eines vorhergehenden Zustands und unter linearen Randbedingungen auf den Zustand schätzt. Es wird ein zeitinvariantes Gauss'sches Rauschen auf Zuständen und Ausgangsgrössen modelliert. V. Kurkin, "Algorithm for Adaptive Estimation of the Load in a Computer System". Automatic Control and Computer Sciences, Bd. 18 Nr. 4, 1984, Seiten 1-7, USA, zeigt ein lineares Zustandsschätzverfahren welches auf einem Kalmanfilter basiert und zeitvariantes Messrauschen, jedoch keine Randbedingungen berücksichtigt.
Wojsznis et al., "Predictive Control Implementation into DCS controller", Advances in Instrumentation and Control, 49(1994), Teil 3, Seiten 767-774, USA, zeigt eine Implementation einer modellprädiktiven Regelung mit einem variablen Prädiktionshorizont. Ein Prädiktor bestimmt einen Ausgang eines Systems durch Faltung eines Vektors von Steuerwerten mit einer Matrix von Schrittantwortkoeffizienten. In gleicher Weise werden gemessene Störeinflüsse berücksichtigt. Es werden jedoch weder Randbedingungen noch ein Mass für die Genauigkeit von Messwerten berücksichtigt.

Gendrom et al., "Constrained Model Predictive Control of Low Order Plants based on Model Weighting Adaptation", Journal A, 35(1994), No. 3, Seiten 18-25, Antwerpen, BE, zeigt einen Algorithmus zur modellprädiktiven Regelung, welcher zeitlich invariantes Messrauschen sowie vorgegeben Grenzwerte für Ein und Ausgänge des geregelten Systems berücksichtigt.

**Darstellung der Erfindung**

Es ist Aufgabe der Erfindung, ein Verfahren und eine Einrichtung der eingangs genannten Art- zu schaffen, welche es erlauben, einen geschätzten Zustand anhand eines vorhergehenden geschätzten Zustands und unter Einhaltung von allgemeinen physikalischen Randbedingungen zu bestimmen.

Diese Aufgabe lösen ein Verfahren und eine Einrichtung zur Zustandsschätzung mit den Merkmalen der Patentansprüche 1 und 13.

Im erfindungsgemässen Verfahren wird nach einer Messung ein Zustand eines technischen Systems in der Form eines Zustandsvektors $x$ anhand von neuen Messdaten aus dem System, von einem Mass für die Genauigkeit der Messdaten, eines vorangehenden Zustands sowie von Randbedingungen geschätzt. Dabei wird der geschätzte Zustand gemäss den Ansprüchen 1 respektive 13 bestimmt, und sind die Randbedingungen physikalische Randbedingungen von der Form $g(x)=0$.

Der berücksichtigte vorangehende Zustand ist vorzugsweise ein unmittelbar vorangehender Zustand.

Durch das erfindungsgemässe Verfahren wird es möglich, sowohl einen vorhergehenden Zustand als auch physikalische Randbedingungen in die Schätzung einzubeziehen. Damit wird die Genauigkeit des geschätzten Zustands und die Qualität einer darauf basierenden Regelung oder Steuerung erhöht. Beispielsweise wird die Robustheit einer Schätzung gegenüber rauschbedingten und anderen Ausreissern erheblich erhöht. Ein solcher Ausreisser würde beim herkömmlichen Verfahren einen falschen Schätzwert $x_{ML}(y)$ verursachen.

Als System ist ein technischer Prozess beliebiger Art zu verstehen, beispielsweise eine verfahrenstechnische Produktionsanlage, eine elektromechanischer Einrichtung oder eine Anlage zur Energieerzeugung, insbesondere ein thermisches Kraftwerk zur Erzeugung elektrischer Energie.

Hier und im Folgenden wird der Begriff "Zustand" nicht im engeren Sinne der dynamischen Systemtheorie verwendet, also nicht nur für die minimale Information zur Beschreibung des zeitlichen Systemverhaltens, sondern im weiteren Sinne für alle Systemgrössen, die von Interesse sind. Der Einfachheit halber wird an manchen Stellen anstelle des Begriffes "Mass für die Genauigkeit" der Begriff "Genauigkeit" verwendet.

In einer bevorzugten Variante des erfindungsgemässen Verfahrens wird anhand der Genauigkeit der Systemgrössen ihre Unsicherheit, beispielsweise in der Form von Wahrscheinlichkeitsintervallen, bestimmt und in der Regelung des Systems berücksichtigt. Dadurch können erwartete Betriebskosten laufend und umfassender bestimmt und optimiert werden. Insbesondere können betriebliche Risiken vermindert werden, indem beispielsweise die Unsicherheit einer kritischen Systemgrösse berücksichtigt wird, wenn diese Grösse in einem bestimmten Bereich gehalten werden muss.

Eine erfindungsgemässe Einrichtung weist ein Mittel zur Schätzung von Zustandsgrössen unter Randbedingungen, ein Mittel zur Voraussage von Zustandsgrössen, ein Mittel zur Schätzung von Genauigkeiten und ein Mittel zur Schätzung einer Genauigkeit von Voraussagen auf.

Eine bevorzugte Ausführungsform der erfindungsgemässen Einrichtung weist weiter Mittel zur Bestimmung von Unsicherheiten sowie Mittel zur Optimierung und Regelung des Verhaltens des Systems auf.

Weitere bevorzugte Ausführungsformen gehen aus den abhängigen Patentansprüchen hervor.

**Kurze Beschreibung der Zeichnungen**

Im folgenden wird die Erfindung anhand eines bevorzugten Ausführungsbeispiels, welches in den beiliegenden Zeichnungen dargestellt ist, näher erläutert. Es zeigen:

Figur 1    eine Messmodellstruktur gemäss dem Stand der Technik;

Figur 2    eine Systemmodellstruktur gemäss der Erfindung;

Figur 3    eine erfindungsgemässe Einrichtung;

Figur 4    eine Estimatoreinheit der erfindungsgemässen Einrichtung; und

Figur 5    eine Regeleinheit der erfindungsgemässen Einrichtung.

Die in den Zeichnungen verwendeten Bezugszeichen und deren Bedeutung sind in der Bezugszeichenliste zusammengefasst aufgelistet. Grundsätzlich sind in den Figuren gleiche Elemente mit gleichen Bezugszeichen versehen.

**Wege zur Ausführung der Erfindung**

Zum besseren Verständnis der Ausführungsbeispiele wird zuerst das erfinderische Verfahren in allgemeiner Form anhand seiner theoretischen Herleitung beschrieben.
Es wird zuerst gezeigt, wie der Zustand eines Systems geschätzt wird. Anschliessend wird gezeigt, wie die Berechnungen durch Linearisierung und durch Anwendung des Matrizeninversionslemmas vereinfacht werden.
Im Verfahren gemäss dem Stand der Technik wurde ein Zustand eines Systems zu einem bestimmten Zeitpunkt, beispielsweise in einem Gleichgewichtszustand, bestimmt. Dabei wurde angenommen, dass die Messung zum gleichen Zeitpunkt vorgenommen wurde. Hier wird nun das schwierigere Problem betrachtet, zu einem $k$-ten Zeitpunkt, in dem der Zustand eines zeitdiskreten Systems betrachtet wird, einen zeitvarianten $d$-dimensionalen Zustand $X_k$, zu schätzen, wobei frühere Stellwerte $U_0,...,U_{k-1}$ und Messwerte $Y_0,...,Y_k$ bekannt sind. Dies enstpricht vorerst der Aufgabe eines Kalmanfilters, wobei aber zusätzlich auch Randbedingungen für die Zustände eingehalten und die Genauigkeit der Schätzung bestimmt werden müssen. Somit muss die ganze bedingte Wahrscheinlichkeitsverteilung von $X_k$ bestimmt werden.
Figur 2 zeigt ein dem Verfahren zugrundeliegendes mathematisches Modell eines Systems, auch Strecke oder Regelstrecke genannt. Darin sind insbesondere Einflüsse auf den Zustands durch nicht messbare Störungen modelliert. Das Modell bildet Störungen nach, die sich relativ zu der systemeigenen Dynamik langsam ändern. Dies geschieht mittels eines Markov-Prozesses $\{X_k\}$, der durch additives unabhängiges Rauschen oder Prozessrauschen $\{V_k\}$ getrieben und durch ein Stellsignal $\{U_k\}$ gesteuert wird.
Der Zustand verläuft für $k$=0,1,2,... gemäss

$$X_{k+1} = f(X_k,U_k) + V_k \tag{10}$$

unter der Randbedingung

$$g(X_k) = 0, \tag{11}$$

welche beispielsweise physikalische Erhaltungssätze des Systems repräsentiert. Weiter sei $h(X_k)$ ein unverrauschter $m$-dimensionaler Ausgang des Systems. Eine Messung $Y_k$ des Ausgangs sei durch ein unabhängiges additives Rauschen $W_k$ gestört, das für alle $k$ und alle $j$ unabhängig von $X_j$ und $V_j$ ist. Dieses repräsentiert beispielsweise Sensorrauschen. Somit ist

$$Y_k = h(X_k) + W_k. \tag{12}$$

Im klassischen Kalman-Filter sind $f$ und $h$ lineare Abbildungen, und die Abbildung $g$ existiert nicht. Das Kalmanfilter setzt üblicherweise auch voraus, dass die statistischen Eigenschaften des Prozessrauschens und des Messrauschens zeitinvariant sind.
Erfindungsgemäss wird der Zustand in folgender Weise geschätzt: es wird ein beliebiger Zeitpunkt $k$ betrachtet. Es wird nun die bedingte Wahrscheinlichkeitsverteilung von $X_k$ bestimmt, gegeben die Stellwertfolge $U_0,...,U_{k-1}$, die Messwertfolge $Y_0,...,Y_k$ und die Randbedingung (11). Neben einem Schätzwert $X_k$, also einem Punkt im Zustandsraum, wird auch die Unsicherheit des Schätzwertes bestimmt. Da die Schätzung on-line geschehen soll, wird eine rekursive Lösung entwickelt.
Gemäss dem Theorem der totalen Wahrscheinlichkeit ist die Verteilung von $X_k$ vor der Messung $Y_k$ gegeben durch

$$p_{X_k|Y_0\ldots Y_{k-1}}(x_k \mid y_0,\ldots,y_{k-1}) =$$

$$\int_{-\infty}^{\infty} p_{X_{k-1}|Y_0\ldots Y_{k-1}}(x_{k-1} \mid y_0,\ldots,y_{k-1})\, p_{X_k|X_{k-1},Y_0\ldots Y_{k-1}}(x_k \mid x_{k-1},y_0,\ldots,y_{k-1})\, dx_{k-1}$$

und ist aufgrund der Randbedingungen proportional zu $\delta(g(x_k))$. Da die Stellwertfolge $\{U_k\}$ bekannt ist, sind alle gezeigten Wahrscheinlichkeiten auch bezüglich der Stellwertfolge bedingt. Der Einfachheit halber wird dies jedoch nicht in jedem Ausdruck notiert.

Da $\{X_k\}$ ein kontrollierter Markov-Prozesse ist, gilt

$$p_{X_k|X_{k-1}Y_0\ldots Y_{k-1}}(x_k|x_{k-1},y_0,\ldots,y_{k-1}) = p_{X_k|X_{k-1}}(x_k|x_{k-1}) = p_V(x_k\text{-}f(x_{k-1},u_{k-1})), \qquad (13)$$

wobei die zweite Gleichheit aus der Addition der Zustandsstörung $V_k$ folgt. Somit ist

$$p_{X_k|Y_0\ldots Y_{k-1}}(x_k \mid y_0,\ldots,y_{k-1}) = \int_{-\infty}^{\infty} p_{X_{k-1}|Y_0\ldots Y_{k-1}}(x_{k-1} \mid y_0,\ldots,y_{k-1})\, p_V(x_k - f(x_{k-1},u_{k-1}))\, dx_{k-1}$$

$$(14)$$

Wegen den Annahmen betreffen des Messrauschens $W_k$ wird

$$p_{Y_k|X_kY_0\ldots Y_{k-1}}(y_k|x_k,y_0,\ldots,y_{k-1}) = p_{Y_k|X_k}(y_k|x_k) = p_W(y_k\text{-}h(x_k)). \qquad (15)$$

Somit ist die posteriore Verteilung von $X_k$ gleich

$$p_{X_k|Y_0\ldots Y_k}(x_k \mid y_0,\ldots,y_k) = \frac{p_{X_k|Y_0\ldots Y_{k-1}}(x_k \mid y_0,\ldots,y_{k-1})\, p_W(y_k - h(x_k))}{\int_{-\infty}^{\infty} p_{X_k|Y_0\ldots Y_{k-1}}(x_k \mid y_0,\ldots,y_{k-1})\, p_W(y_k - h(x_k))\, dx_k} \cdot \qquad (16)$$

Schliesslich ist die MAP-Estimation gleich der Lösung von

$$\min_x -\log p_{X_k|Y_0\ldots Y_{k-1}}(x \mid y_0,\ldots,y_{k-1}) - \log p_W(y_k - h(x)) \qquad (17)$$

unter der Randbedingung

$$g(x) = 0. \qquad (18)$$

Die Berechnungen können in folgender Weise angenähert und vereinfacht werden: Ohne Einschränkung der Allgemeinheit kann angenommen werden, dass $\{W_k\}$ und $\{V_k\}$ den Mittelwert Null haben. Weiter gelten

$$X_k = f(X_{k-1},U_{k-1}) + V_{k-1} \qquad (19)$$

$$E(W_k|Y_0,\ldots,Y_{k-1}) = E(W_k) = 0 \qquad (20)$$

$$E(V_k|Y_0,...,Y_k) = E(V_k) = 0 \tag{21}$$

wegen den Annahmen betreffend den Unabhängigkeiten von $\{W_k\}$ und $\{V_k\}$ für alle $k>0$. Der Ausdruck $f$ kann für $\bar{x}$ nahe bei $x_{k-1}$, angenähert werden durch

$$f(x_{k-1},u_{k-1}) \approx f(\bar{x},u_{k-1})+\nabla f(\bar{x},u_{k-1})\cdot(x_{k-1}-\bar{x}) \tag{22}$$

und insbesondere für

$$\bar{x} = E(X_{k-1}|Y_0,...,Y_{k-1}) \triangleq \hat{X}_{k-1|k-1}. \tag{23}$$

Somit ist gemäss (19) und (22)

$$X_k \approx f(\hat{X}_{k-1|k-1},U_{k-1}) + A_{k-1}(X_{k-1} - \hat{X}_{k-1|k-1}) + V_{k-1}, \tag{24}$$

wobei die Matrix

$$A_k \triangleq \nabla f(\hat{x}_{k|k},u_k) \tag{25}$$

eingeführt wurde. Der Erwartungswert von $X_k$ (24), gegeben $Y_0,...,Y_{k-1}$, wird aus (19), (21) und (23) zu

$$\hat{X}_{k|k-1} \, E(X_k|Y_0,...,Y_{k-1}) = E[f(X_{k-1},U_{k-1})|Y_0,...,Y_{k-1}] \approx f(\hat{X}_{k-1|k-1},U_{k-1}). \tag{26}$$

erhalten. Weiter ist, aufgrund von (19) und der Unabhängigkeit des Prozesses $\{V_k\}$,

$$\Sigma_{k|k-1} \triangleq \mathrm{Cov}(X_k|Y_0,...,Y_{k-1}) = \mathrm{Cov}[f(X_{k-1},U_{k-1})|Y_0,...,Y_{k-1}] + \Sigma_V.$$

Dabei darf $\Sigma_{k|k-1}$ nicht mit der Kovarianzmatrix der Schätzung $\hat{X}_{k|k-1}$, das heisst $\mathrm{Cov}(\hat{X}_{k|k-1}|X_k)$ verwechselt werden. Aus (24), folgt

$$\Sigma_{k|k-1} \approx A_{k-1}\Sigma_{k-1|k-1}A_{k-1}^T + \Sigma_V. \tag{27}$$

Da $V_{k-1}$ und $X_{k-1}$ unabhängig sind, ist die Wahrscheinlichkeitsverteilung $X_k$, gegeben $Y_0,...,Y_{k-1}$ - wegen der Taylorapproximation (24) - im Wesentlichen durch die Faltung der Verteilung von $A_{k-1}X_{k-1}$ und $V_{k-1}$ gegeben. Die Matrixmultiplikation entspricht einer Summierung stochastischer, aber nicht vollständig unabhängiger Variablen. Dazu kommt, dass die Faltung rekursiv ist, das heisst für jedes $k$ kommt eine neue Faltung hinzu. Daraus folgt, dass das zentrale Grenzwerttheorem die gauss'sche Näherung der prioren Dichte

$$p_{X_k|Y_0...Y_{k-1}}(x_k|y_{0,...,}y_{k-1}) \approx N(f(\hat{x}_{k-1|k-1},u_{k-1}); A_{k-1}\Sigma_{k-1|k-1}A_{k-1}^T + \Sigma_V) \tag{28}$$

rechtfertigt. Es ist zu beachten, dass die Gauss'sche priore Dichte (Gaussian prior) aufgrund der Approximation nicht genau proportional zu $\delta(g(x_k))$ ist. Bei der Bestimmung der a posteriori Dichte wird diese Randbedingung jedoch durch die Minimierung unter Randbedingung (17)-(18) berücksichtigt.

Indem die der Messung entsprechende Abbildung $h$ in ähnlicher Weise wie oben verarbeitet wird, sei

$$C_k \triangleq \nabla h(\hat{x}_{k/k}). \tag{29}$$

Dann ist

$$Y_k \approx h(\hat{X}_{k|k-1}) + C_k(X_k - \hat{X}_{k|k-1}) + W_k \tag{30}$$

$$\hat{Y}_{k|k-1} \approx h(\hat{X}_{k|k-1}) \tag{31}$$

gemäss (20). Die posteriore Kovarianzmatrix wird aus der "Kalman gain equation", folgend aus dem Orthogonalitäts-prinzip, erhalten:

$$\Sigma_{k|k} \hat{=} \mathrm{Cov}(X_k|Y_0,...,Y_k) \approx (I\text{-}K_kC_k)\Sigma_{k|k-1}, \tag{32}$$

wobei

$$K_k \hat{=} \Sigma_{k|k-1}C_k^{\mathsf{T}}(C_k\Sigma_{k|k-1}C_k^{\mathsf{T}} + \Sigma_W)^{-1} \tag{33}$$

die Kalmanverstärkung (Kalman gain) ist. Die gauss'sche Approximation der posterioren Verteilung von $X_k$ ist schliesslich

$$p_{X_k|Y_0...Y_k}(x_k|y_0,...,y_k) \approx N(\hat{x}_{k|k}; \Sigma_{k|k}) \tag{34}$$

wobei

$$\hat{x}_{k|k} := \underset{\{x|g(x)=0\}}{\arg\min} (x - \hat{x}_{k|k-1})^{\mathsf{T}} \Sigma_{k|k-1}^{-1} (x - \hat{x}_{k|k-1}) - \log p_W(y_k - h(x)) \tag{35}$$

Die Gleichung (35) bedeutet, dass $\hat{x}_{k|k}$ ein Wert eines Zustands $x$ ist, für den, unter der Randbedingung $g(x)$ =0, der Wert von

$$(x - \hat{x}_{k|k-1})^{\mathsf{T}} \Sigma_{k|k-1}^{-1} (x - \hat{x}_{k|k-1}) - \log p_W(y_k - h(x))$$

minimal ist.
Unsicherheiten werden in folgender Weise bestimmt: Es seien Messungen $Y_0 = y_0,...,Y_k = y_k$ bekannt. Dann enthält die Funktion $p_{X_k|Y_0...Y_k}(\cdot|y_0,...,y_k)$ sämtliche Information, die zum Zeitpunkt $k$ über den Zustand $X_k$ bekannt ist. Beispielsweise folgt, dass im Zustandsraum das Ellipsoid

$$\Gamma \hat{=} \{x \mid (x - \hat{x}_{k|k})^{\mathsf{T}} \Sigma_{k|k}^{-1} (x - \hat{x}_{k|k}) \leq \gamma_\alpha\} \qquad 0 < \alpha < 1 \tag{36}$$

den Wert $X_k$ mit der - ungefähren - Wahrscheinlichkeit $\alpha$ enthält, das heisst

$$P(X_k \in \Gamma \mid Y_0 = y_0,...,Y_k = y_k) \approx \alpha$$

In (36), ist $\gamma_\alpha$ die Lösung der impliziten Gleichung

$$\int_{\Gamma} \exp\left[-(x - \hat{x}_{k|k})^{\mathrm{T}} \Sigma_{k|k}^{-1} (x - \hat{x}_{k|k}) / 2\right] dx = \left((2\pi)^d \mid \Sigma_{k|k} \mid\right)^{1/2} \alpha$$

Einfacher gesagt kann die Unsicherheit für jede Zustandsgrösse zusammengefasst werden. Beispielsweise werde die $i$-te Zustandsgrösse zum Zeitpunkt $k$ betrachtet. Das Intervall, in dem $(X_k)_i$ mit einer Wahrscheinlichkeit von beispielsweise 0.95 liegt, gegeben dass Messungen $y_0,...,y_k$. vorliegen, wird aus (34), bestimmt als

$$\left[(\hat{x}_{k|k})_i - 2(\Sigma_{k|k})_i^{1/2}, (\hat{x}_{k|k})_i + 2(\Sigma_{k|k})_i^{1/2}\right], \tag{37}$$

das heisst, es gilt

$$P\left(\mid (X_k)_i - (\hat{x}_{k|k})_i \mid \le 2(\Sigma_{k|k})_i^{1/2} \mid Y_0 = y_0, \ldots, Y_k = y_k\right) \approx 2\,\mathrm{erf}(2) \approx 0.95$$

Es ist zu beachten, dass (37) nicht äquivalent zu einem Konfidenzintervall ist, da im allgemeinen $\Sigma_{k|k}$ (32) nicht gleich der Kovarianz des Zustandsestimators oder Schätzers $\mathrm{Cov}(X_{k|k}|X_k)$ ist.

Zur Verringerung des Rechenaufwandes im oben beschriebenen Verfahren werden Genauigkeitsmatrizen als Mass für Genauigkeit eingeführt, sowie das Matrizeninversionslemma angewandt. Dies geschieht in folgender Weise:

Eine Genauigkeitsmatrix wird als Inverse einer Kovarianzmatrix definiert. Das Matrizeninversionslemma besagt, dass

$$(A + BCD)^{-1} = A^{-1} - A^{-1}B(C^{-1} + DA^{-1}B)^{-1}DA^{-1}, \tag{38}$$

gilt, vorausgesetzt dass die Inversen existieren. Dann folgt, dass

$$(C_k \Sigma_{k|k-1} C_k^{\mathrm{T}} + \Sigma_W)^{-1} = \Sigma_W^{-1} - \Sigma_W^{-1} C_k (\Sigma_{k|k-1}^{-1} + C_k^{\mathrm{T}} \Sigma_W^{-1} C_k)^{-1} C_k^{\mathrm{T}} \Sigma_W^{-1} \tag{39}$$

Unter Einbezug von (33) und Inversion von (32) ergibt sich

$$\Sigma_{k|k}^{-1} = \Sigma_{k|k-1}^{-1} + C_k^{\mathrm{T}} \Sigma_W^{-1} C_k \tag{40}$$

Andererseits ergibt die Inversion von (27)

$$\Sigma_{k+1|k}^{-1} = \Sigma_V^{-1} - \Sigma_V^{-1} A_k (\Sigma_{k|k}^{-1} + A_k^{\mathrm{T}} \Sigma_V^{-1} A_k)^{-1} A_k^{\mathrm{T}} \Sigma_V^{-1} \tag{41}$$

Zum Schluss wird festgestellt, dass die MAP-Schätzung (35) bereits in Abhängigkeit der Genauigkeitsmatrix $\Sigma_{k|k}$ ausgedrückt ist. Somit ist nur in (41) eine explizite Matrixinversion vonnöten. Meist ist die Anzahl $m = \dim(y)$ von Messsignalen grösser als die Anzahl $d = \dim(x)$ von Zustandsgrössen, da die Messungen redundant sind. Somit ist die in (41) zu invertierende Matrix mit ($d \times d$) wesentlich kleiner als ($m \times m$) in (33).

**Beispiele**

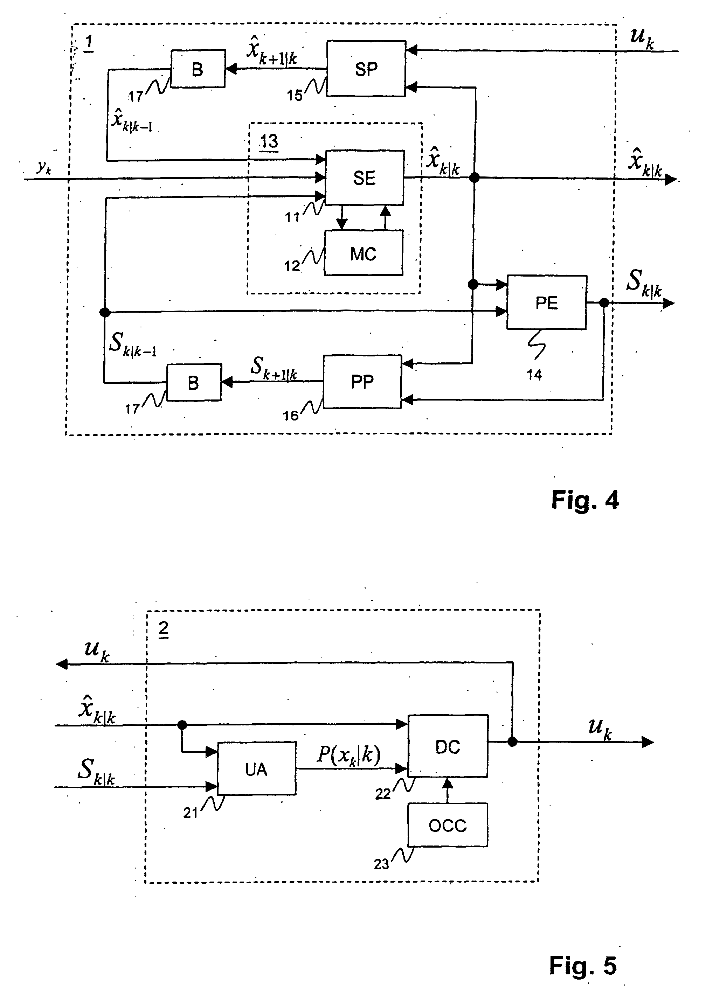

Figur 3 zeigt eine erfindungsgemässe Einrichtung. Sie besteht aus einer Estimatoreinheit 1 und einer Regeleinheit 2. Figur 4 zeigt die Estimatoreinheit 1, Figur 5 die Regeleinheit 2. Die Estimatoreinheit 1 weist einen konsistenten Zustandsestimator 13, einen Genauigkeitsestimator 14, einen Zustandsprädiktor 15, einen Genauigkeitsprädiktor 16 und zwei Zwischenspeicher 17 auf.

Der konsistente Zustandsestimator weist einen Zustandsestimator 11 auf, der mit Randbedingungen 12 gekoppelt ist, welche beispielsweise die physikalischen Erhaltungsbedingungen oder Bilanzen repräsentieren. Die Regeleinheit 2 weist eine Unsicherheitsbestimmung 21, eine Steuerung/Regelung 22 und eine Betriebskostenvorgabe 23 auf. Die Estimatoreinheit 1 ist durch eine Messverbindung zur Übermittlung von Messsignalen $y$ mit einem System gekoppelt. Die Regeleinheit ist durch eine Regelverbindung zur Übermittlung von Stellsignalen $u$ mit dem System gekoppelt.

Als System ist ein technischer Prozess beliebiger Art zu verstehen, beispielsweise eine verfahrenstechnische Produktionsanlage, eine elektromechanischer Einrichtung oder eine Anlage zur Energieerzeugung, insbesondere ein thermisches Kraftwerk zur Erzeugung elektrischer Energie.

Die erfindungsgemässe Einrichtung arbeitet zyklisch, wobei in einem Zyklus mit dem Index $k$ die folgenden Verfahrensschritte ausgeführt werden:

Der Zustandsestimator 11 schätzt einen wahrscheinlichsten aktuellen Zustand $\hat{x}_{k|k}$ des Systems, gegeben die Randbedingungen 12, aktuelle Messwerte $y_k$ sowie in Zwischenspeichern 17 gespeicherte, im letzten Zyklus im Zustandsprädiktor 15 und im Genauigkeitsprädiktor 16 ermittelte vorausgesagte Zustände $\hat{x}_{k|k-1}$ respektive Genauigkeiten $S_{k|k-1}$. Der wahrscheinlichste Zustand ist jener, der die Randbedingungen 12, das heisst $g(x_{k|k}) = 0$, erfüllt und gleichzeitig eine Kombination von zwei Abweichungen minimiert. Die erste dieser Abweichungen ist die Abweichung des Zustands vom vorausgesagten Zustand, gewichtet mit der Genauigkeit dieser Zustandsvoraussage. Die zweite dieser Abweichungen ist die Abweichung der mit dem Zustand konsistenten Messungen von den tatsächlichen Messungen, gewichtet mit der Genauigkeit der Messungen. Die Genauigkeit der Messungen kann dabei laufend angepasst oder aber als konstant angenommen worden sein.

Der Genauigkeitsestimator 14 bestimmt eine Genauigkeit $S_{k|k}$ des geschätzten Zustandes aus der Genauigkeit $S_{k|k-1}$ des im letzten Zyklus vorausgesagten Zustandes sowie aus dem aktuellen geschätzten Zustand $\hat{x}_{k|k}$. Die neue Genauigkeit $S_{k|k}$ ist gleich der letzten Genauigkeit $S_{k|k-1}$, vergrössert um die durch die neue Messungen gewonnene Genauigkeit.

Der Zustandsprädiktor 15 bestimmt einen wahrscheinlichsten Wert $\hat{x}_{k+1|k}$ des Zustands im nächsten Zyklus aus der aktuellen Zustandsschätzung $\hat{x}_{k|k}$ und den Stellsignalen $u_k$. Dazu wird ein Modell der Dynamik des Systems verwendet.

Der Genauigkeitsprädiktor 16 bestimmt eine Genauigkeit $S_{k+1|k}$ einer Voraussage. Diese Genauigkeiten können jene der Zustände und Messungen, oder aber nur jene der Zustände umfassen. Sie werden bestimmt durch die aktuellen Genauigkeiten $S_{k|k}$ und die aktuelle Zustandsschätzung $\hat{x}_{k|k}$. Die Genauigkeit $S_{k+1|k}$ der Voraussage $\hat{x}_{k+1|k}$ entspricht der aktuellen Genauigkeit $S_{k|k}$, vermindert um eine Unsicherheit in der Modellierung des Systemverhaltens.

Die Unsicherheitsbestimmung 21 ermittelt die Wahrscheinlichkeitsverteilung $p(x_k|k)$ des aktuellen Zustands $x$ aus der Zustandsschätzung $\hat{x}_{k|k}$ sowie aus der aktuellen Genauigkeit $S_{k|k}$. Die Unsicherheitsbestimmung 21 ermittelt weiter auch Wahrscheinlichkeitsintervalle, in denen die Zustandsgrössen mit einer vorgegebenen Wahrscheinlichkeit enthalten sind.

Die Steuerung/Regelung 22 bestimmt Stellwerte $u_k$ aus der aktuellen Zustandsschätzung $\hat{x}_{k|k}$ sowie aus deren Unsicherheiten. Beispielsweise werden für verschiedene Szenarien, das heisst für verschiedene Stellwertverläufe, die Wahrscheinlichkeiten der zu erwartenden Zustände bestimmt. Diese Wahrscheinlichkeiten werden mit zustandsabhängigen Kosten oder Risiken aus der Betriebskostenvorgabe 23 kombiniert und damit Wahrscheinlichkeiten von Kosten oder Risiken der verschiedenen Szenarien bestimmt. Eine Optimierung bezüglich dieser Kosten oder Risiken ergibt die Stellwerte. Die Stellwerte wirken über Aktoren auf den System ein.

In einer bevorzugten Variante des erfindungsgemässen Verfahrens werden die folgenden Schritte in den angegebenen Komponenten durchgeführt.

Unter Annahme mittelwertfreier gauss'scher Prozesse $\{W_k\}$ und $\{V_k\}$ sind

- ■ eine Zustandsabbildung $f$,
- ■ ein Satz von Randbedingungen $g$,
- ■ eine Messabbildung $h$,
- ■ eine Genauigkeitsmatrix

$$S_V = \Sigma_V^{-1}$$

des Zustands- und
- ■ eine Genauigkeitsmatrix

$$S_W = \dot{\Sigma}_W^{-1}$$

des Messrauschens

gegeben. Diese Werte werden vorzugsweise anhand von physikalischen Modellen und/oder von Messungen bestimmt. Vorteilhafterweise werden die Werte von $S_V$ und/oder $S_W$ laufend angepasst.

Schritt 0: Zur Initialisierung des Verfahrens wird

- $k := -1$ gesetzt,
- die priore Wahrscheinlichkeitsverteilung des Initialzustands $X_0$ bestimmt durch Wahl eines a priori wahrscheinlichsten Wertes $x_{0|-1}$, der die Randbedingungen $g(x_{0|-1}) = 0$ erfüllt, und einer Genauigkeitsmatrix $S_{0|-1}$. Dabei wird

$$S_{0|-1} = \Sigma_{0|-1}^{-1}$$

vorteilhafterweise als Diagonalmatrix gewählt.

Schritt 1: Für eine neue Messung wird

- $k := k+1$ gesetzt
- $y_k$ gemessen

Schritt 2: Zur Schätzung des wahrscheinlichsten Zustands, gegeben die neue Messung, wird im konsistenten Zustandsestimator 13 gemäss (35)

- das Minimierungsproblem unter Randbedingung

$$\hat{x}_{k|k} := \underset{\{x|g(x)=0\}}{\arg\min}\ (x - \hat{x}_{k|k-1})^{\mathrm{T}} S_{k|k-1} (x - \hat{x}_{k|k-1}) + (y_k - h(x))^{\mathrm{T}} S_W (y_k - h(x))$$

gelöst (Der rechte Term im obenstehenden Ausdruck ergibt sich aus dem entsprechenden Term von (35) unter der obigen Annahme gauss'scher Prozesse).

Für eine numerische Minimierung wird beispielsweise $x = \hat{x}_{k|k-1}$ als Anfangsbedingung gewählt. Als Minimierungsverfahren eignen sich beispielsweise, unter Verwendung von Lagrange-Multiplikatoren, die Konjugierte Gradientenminimierung, Gauss-Newton Minimierung oder stochastische Optimierungsverfahren. Die resultierende Schätzung $\hat{x}_{k|k}$ ist konsistent mit dem Modell, das heisst, sie erfüllt $g(\hat{x}_{k|k}) = 0$.

Schritt 3: Zur Bestimmung der Genauigkeit der Schätzung wird im Genauigkeitsestimator 14 gemäss (29) respektive (40)

- $C_k := \nabla h(\hat{x}_{k|k})$ und
- $S_{k|k} := S_{k|k-1} + C_k^T S_W C_k$ bestimmt.

Die Verteilung des Zustands $X_k$, gegeben die letzte Messung sowie alle frühere Messungen, ist näherungsweise Gauss'sch, mit dem Mittelwert $\hat{x}_{k|k}$ und der Genauigkeitsmatrix $S_{k|k}$.

Schritt 4: Unter Berücksichtigung der Betriebskostenvorgabe 23 werden in der Steuerung/Regelung 22

- Stellwerte $u_k$

bestimmt und ausgegeben. Dieser Schritt ist optional und wird nur durchgeführt, falls die Zustandsschätzung mit einer Regelung verbunden ist.

Schritt 5: Zur Voraussage des Zustands im nächsten Zyklus wird im Zustandsprädiktor 15 gemäss (26)

- $\hat{x}_{k+1|k} := f(\hat{x}_{k|k}, u_k)$

bestimmt.

Schritt 6: Zur Schätzung der Genauigkeiten der Voraussage gemäss Schritt 5 wird im Genauigkeitsprädiktor 16 gemäss (25) und (41)

- $A_k := \nabla f(\hat{x}_{k|k}, u_k)$,
- $Q_k := (S_{k|k} + A_k^T S_v A_k)^{-1}$ und
- $S_{k+1|k} := S_v - S_v A_k Q_k (S_v A_k)^T$

bestimmt.

Schritt 7: Zur Bestimmung von Wahrscheinlichkeitsintervallen wird in der Unsicherheitsbestimmung 21 beispielsweise ein 95%-Intervall für $(X_k)_i$ gemäss (37) zu

$$(\hat{x}_{k|k})_i \pm \frac{2}{\sqrt{(S_{k|k})_i}}$$

bestimmt. Dieser Schritt ist optional und wird vorteilhafterweise nur durchgeführt, falls die Zustandsschätzung mit einer Regelung verbunden ist.

In einer vorteilhaften Variante des erfinderischen Verfahren werden unbekannte Parameter, beispielsweise Kovarianzen oder Genauigkeiten, als zusätzliche Zustände betrachtet. Insbesondere wird ein Parameter θ, der als konstant angenommen wird, als $j$-ter zeitinvarianter Zustand $(x)_j \hat{=} \theta$ betrachtet. Das heisst, dass die Zustandsabbildung $f$ die Gleichung

$$(f(x,u))_j = (x)_j$$

für alle $x$ und $u$ erfüllt. In diesem Fall sind die entsprechenden Elemente des Gradienten von $f$ zu jedem Zeitpunkt $k$

$$\begin{cases} (A_k)_{ij} = (A_k)_{ji} = 0 & \text{für alle } i \neq j \\ (A_k)_{jj} = 1 \end{cases}$$

Weiter erfüllt die Kovarianz der Zustandsstörungen

$$(\Sigma_v)_{ij} = (E_v)_{ji} = 0 \qquad \text{für alle } i.$$

Anhand des oben gezeigten Verfahrens wird eine rekursive Schätzung der Konstanten θ aufgrund der Messungen $y_0,...,y_k$ erhalten. Die Varianz der Schätzung wird mit zunehmendem $k$ monoton abnehmen, das heisst ihre Genauigkeit wird dauernd zunehmen.

Das erfindungsgemässe Verfahren und die Einrichtung ermöglichen es also, den Zustand einer technischen Systems zu schätzen, wobei neben statischen physikalischen Randbedingungen auch die Dynamik des Systems sowie die Information über die Genauigkeit oder die Unsicherheit der Schätzung berücksichtigt wird. Dadurch verbessert sich die Qualität der Schätzung und einer allfälligen darauf basierenden Regelung/Steuerung.

In einer bevorzugten Variante der Erfindung wird sie zur Beobachtung und/oder Regelung eines industriellen Produktionsprozesses oder einer Kraftwerksanlage, insbesondere eines Kombikraftwerks, verwendet. Messwerte sind beispielsweise Drücke, Temperaturen, Massenströme, Spannungen, Ströme, Dichten oder Geschwindigkeiten.

Physikalische Randbedingungen sind beispielsweise durch Massen-, Energie oder Impulserhaltungssätze gegeben, oder durch mechanisch bedingte geometrische Einschränkungen der räumlichen Lage von Objekten.

**Bezugszeichenliste**

1     Estimatoreinheit (EU)
2     Regeleinheit (CU)
11    Zustandsestimator (SE)

12 Randbedingungen (MC)
13 Konsistenter Zustandsestimator
14 Genauigkeitsestimator (PE)
15 Zustandsprädiktor (SP)
16 Genauigkeitsprädiktor (PP)
17 Zwischenspeicher (B)
21 Unsicherheitsbestimmung (UA)
22 Steuerung/Regelung (DC)
23 Betriebskostenvorgabe (OCC)
S Genauigkeit
*u,U* Stellwerte
*V* Prozessrauschen
*W* Messrauschen
$\check{x}, \check{X}$ Zustand
*x,X* geschätzter Zustand
*y,Y* Messwerte

**Patentansprüche**

1. Verfahren zur Schätzung eines Zustands eines Systems, wobei das Verfahren zyklisch ausgeführt wird, indem in einem Zyklus ein Zustandsestimator (11) einen geschätzten Zustand in der Form eines Zustandsvektors anhand von Messwerten, anhand eines Masses für die Genauigkeit der Messwerte und unter Einhaltung von Randbedingungen bestimmt, und der Zustandsestimator (11) zur Bestimmung des geschätzten Zustands einen geschätzten Zustand aus einem vorangehenden Zyklus berücksichtigt, **dadurch gekennzeichnet, dass** der Zustandsestimator (11) den geschätzten Zustand als

$$\hat{x}_{k|k} := \underset{\{x|g(x)=0\}}{\arg\min} (x - \hat{x}_{k|k-1})^{\mathsf{T}} S_{k|k-1} (x - \hat{x}_{k|k-1}) - \log p_W (y_k - h(x))$$

und unter Einhaltung von physikalischen Randbedingungen (13) der Form

$$g(\hat{x}_{k|k}) = 0$$

bestimmt, wobei

$\hat{x}_{k|k}$ der durch den Zustandsestimator (11) bestimmte geschätzte vektorielle Zustand zu einem *k*-ten Zeitpunkt unter Berücksichtigung von Messwerten, die bis zu und einschliesslich dem *k*-ten Zeitpunkt vorliegen,
$\hat{x}_{k|k-1}$ ein geschätzter Zustand zum *k*-ten Zeitpunkt unter Berücksichtigung von Messwerten ist, die bis zu und einschliesslich einem (*k*-1)-ten Zeitpunkt vorliegen,
$S_{k|k-1}$ eine Genauigkeitsmatrix, insbesondere eine inverse Kovarianzmatrix, des geschätzten Zustands zum *k*-ten Zeitpunkt unter Berücksichtigung der Messwerte ist, die bis zu und einschliesslich dem (*k*-1)-ten Zeitpunkt vorliegen,
$y_k$ der Wert eines Vektors der Messwerte zum *k*-ten Zeitpunkt ist,
*h(x)* eine vektorielle Funktion ist, die aus dem Zustand *x* einen unverrauschten Ausgang des Systems bestimmt, und
$P_W(\cdot)$ eine Wahrscheinlichkeitsdichte eines Messrauschens ist.

2. Verfahren gemäss Anspruch 1, **dadurch gekennzeichnet, dass** der Zustandsestimator (11) ein Mass für die Genauigkeit des geschätzten Zustands aus einem vorangehenden Zyklus berücksichtigt.

3. Verfahren gemäss Anspruch 1, **dadurch gekennzeichnet, dass** ein Genauigkeitsestimator (14) ein Mass für die Genauigkeit des geschätzten Zustands bestimmt.

4. Verfahren gemäss Anspruch 3, **dadurch gekennzeichnet, dass** eine Unsicherheitsbestimmung (21) anhand des geschätzten Zustands sowie des Masses für die Genauigkeit dieses geschätzten Zustands ein Mass für die Unsicherheit des geschätzten Zustands bestimmt.

5. Verfahren gemäss Anspruch 1, **dadurch gekennzeichnet, dass** der Zustandsestimator 11 den geschätzten Zustand als

$$\hat{x}_{k|k} := \underset{\{x|g(x)=0\}}{\arg\min} (x - \hat{x}_{k|k-1})^T S_{k|k-1} (x - \hat{x}_{k|k-1}) + (y_k - h(x))^T S_W (y_k - h(x))$$

unter der Randbedingung

$$g(\hat{x}_{k|k}) = 0$$

bestimmt, wobei

$$S_W = \Sigma_W^{-1}$$

eine Genauigkeitsmatrix eines Messrauschens, das heisst eine Inverse einer Kovarianzmatrix des Messrauschens ist.

6. Verfahren gemäss Anspruch 1, **dadurch gekennzeichnet, dass** die Berücksichtigung des geschätzten Zustands aus einem vorangehenden Zyklus geschieht, indem ein Zustandsprädiktor (15) aus diesem vorangehenden geschätzten Zustand und aus den vorangehenden Stellsignalen eine Voraussage des aktuellen Zustands erzeugt.

7. Verfahren gemäss Anspruch 6, **dadurch gekennzeichnet, dass** der Zustandsprädiktor (15) durch Berechnung von

$$\hat{x}_{k+1|k} := f(\hat{x}_{k|k}, u_k)$$

einen wahrscheinlichsten Wert $\hat{x}_{k+1|k}$ des Zustandes zu einem $(k+1)$-ten Zeitpunkt vorhersagt, wobei $f(x_k, u_k)$ eine Zustandsabbildung ist, die aus einem Zustand $x_k$ und einem Eingang $u_k$ des Systems zu einem $k$-ten Zeitpunkt einen Zustand $x_{k+1}$ zu einem darauffolgenden $(k+1)$-ten Zeitpunkt bestimmt.

8. Verfahren gemäss Anspruch 2, **dadurch gekennzeichnet, dass** die Berücksichtigung des Masses für die Genauigkeit des geschätzten Zustands aus einem vorangehenden Zyklus geschieht, indem ein Genauigkeitsprädiktor (16) aus diesem vorangehenden Mass für die Genauigkeit des geschätzten Zustands und aus dem vorangehenden geschätzten Zustand eine Schätzung der Genauigkeit einer Voraussage des Zustands erzeugt.

9. Verfahren gemäss Anspruch 8, **dadurch gekennzeichnet, dass** der Genauigkeitsprädiktor (16) durch Berechnung von

$$A_k := \nabla f(\hat{x}_{k|k}, u_k),$$

$$Q_k := (S_{k|k} + A_k^T S_V A_k)^{-1}$$

und

$$S_{k+1|k} := S_V - S_V A_k Q_k (S_V A_k)^T$$

die Genauigkeit $S_{k+1|k}$ der Voraussage des Zustands aus einem aktuellen geschätzten Zustand und einem Mass für die Genauigkeit des aktuellen geschätzten Zustands bestimmt, wobei

$S_{k+1|k}$ eine Genauigkeitsmatrix, insbesondere eine inverse Kovarianzmatrix des geschätzten Zustands zu einem (k+1)-ten Zeitpunkt unter Berücksichtigung von Messwerten ist, die bis zu und einschliesslich einem k-ten Zeitpunkt vorliegen,

$\hat{x}_{k|k}$ ein geschätzter Zustand zum k-ten Zeitpunkt unter Berücksichtigung der Messwerte ist, die bis zu und einschliesslich dem k-ten Zeitpunkt vorliegen,

$f(x_k, u_k)$ eine Zustandsabbildung ist, die aus einem Zustand $x_k$ und einem Eingang $u_k$ des Systems zum k-ten Zeitpunkt einen Zustand $x_{k+1}$ zum darauffolgenden (k+1)-ten Zeitpunkt bestimmt,

$A_k$ eine Matrix der partiellen Ableitungen dieser Zustandsabbildung, das heisst die Hesse'sche Matrix von f an der Stelle $(\hat{x}_{k|k}, u_k)$ ist,

$$S_V = \Sigma_V^{-1}$$

eine Genauigkeitsmatrix eines Prozessrauschens, das heisst die Inverse einer Kovarianzmatrix des Prozessrauschens ist, und

$S_{k|k}$ eine Genauigkeitsmatrix, insbesondere eine inverse Kovarianzmatrix des geschätzten Zustands zum k-ten Zeitpunkt unter Berücksichtigung der Messwerte ist, die bis zu und einschliesslich dem k-ten Zeitpunkt vorliegen.

10. Verfahren gemäss Anspruch 3, **dadurch gekennzeichnet, dass** der Genauigkeitsestimator (14) durch Berechnung von

$$C_k := \nabla h(\hat{x}_{k|k})$$

und

$$S_{k|k} := S_{k|k-1} + C_k^T S_W C_k$$

das Mass $S_{k|k}$ für die Genauigkeit des geschätzten Zustands aus einer im letzten Zyklus vorausgesagten Genauigkeit sowie aus einem aktuellen Zustand bestimmt, wobei

$S_{k|k}$ eine Genauigkeitsmatrix, insbesondere eine inverse Kovarianzmatrix des geschätzten Zustands zu einem k-ten Zeitpunkt unter Berücksichtigung von Messwerten ist, die bis zu und einschliesslich einem k-ten Zeitpunkt vorliegen,

$\hat{x}_{k|k}$ ein geschätzter Zustand zum k-ten Zeitpunkt unter Berücksichtigung der Messwerte ist, die bis zu und einschliesslich dem k-ten Zeitpunkt vorliegen,

$h(x)$ eine vektorielle Funktion ist, die aus einem Zustand x einen unverrauschten Ausgang des Systems bestimmt,

$C_k$ eine Matrix der partiellen Ableitungen dieser Funktion, das heisst die Hesse'sche Matrix von h an der Stelle $(\hat{x}_{k|k})$ ist,

$$S_W = \Sigma_W^{-1}$$

eine Genauigkeitsmatrix eines Messrauschens, das heisst eine Inverse einer Kovarianzmatrix des Messrauschens ist, und

$S_{k|k-1}$ eine Genauigkeitsmatrix, insbesondere eine inverse Kovarianzmatrix des geschätzten Zustands zum k-ten Zeitpunkt unter Berücksichtigung von Messwerten ist, die bis zu und einschliesslich einem (k-1)-ten Zeitpunkt vorliegen.

11. Verfahren gemäss Anspruch 4, **dadurch gekennzeichnet, dass** die Unsicherheitsbestimmung (21) durch eine Bestimmung von Wahrscheinlichkeitsintervallen geschieht, beispielsweise indem ein 95%-Wahrscheinlichkeitsintervall für einen geschätzten Zustand $\hat{x}_{k|k}$ als

$$(\hat{x}_{k|k})_i \pm \frac{2}{\sqrt{(S_{k|k})_i}}$$

bestimmt wird, wobei

$S_{k|k}$ eine Genauigkeitsmatrix, insbesondere eine inverse Kovarianzmatrix des geschätzten Zustands zum $k$-ten Zeitpunkt unter Berücksichtigung von Messwerten ist, die bis zu und einschliesslich einem $k$-ten Zeitpunkt vorliegen,
$(x_{k|k})_i$ ein i-tes Element des Zustandsvektors $\hat{x}_{k|k}$ bezeichnet, und
$(S_{k|k})_i$ ein i-tes Diagonalelement der Genauigkeitsmatrix $S_{k|k}$ bezeichnet.

**12.** Verfahren gemäss Anspruch 1, **dadurch gekennzeichnet, dass** der Zustandsestimator (11) auch Werte unbekannter Parameter des Systems, beispielsweise Masse für Genauigkeiten oder Kovarianzen schätzt.

**13.** Einrichtung zur Schätzung eines Zustands eines Systems, die einen Zustandsestimator (11) zur zyklischen Bestimmung eines geschätzten Zustands in der Form eines Zustandsvektors anhand von Messwerten, eines Masses für die Genauigkeit der Messwerte und unter Einhaltung von Randbedingungen aufweist, und der Zustandsestimator (11) zur Bestimmung des geschätzten Zustands unter Berücksichtigung eines geschätzten Zustands aus einem vorangehenden Zyklus ausgebildet ist,
**dadurch gekennzeichnet,**
**dass** der Zustandsestimator (11) zur Bildung des geschätzten Zustands als

$$\hat{x}_{k|k} := \underset{\{x|g(x)=0\}}{\arg\min} (x - \hat{x}_{k|k-1})^\mathsf{T} S_{k|k-1} (x - \hat{x}_{k|k-1}) - \log p_W(y_k - h(x))$$

und unter Einhaltung von physikalischen Randbedingungen (13) der Form

$$g(\hat{x}_{k|k})=0$$

ausgebildet ist, wobei

$\hat{x}_{k|k}$ der durch den Zustandsestimator (11) bestimmte geschätzte vektorielle Zustand zu einem $k$-ten Zeitpunkt unter Berücksichtigung von Messwerten, die bis zu und einschliesslich dem $k$-ten Zeitpunkt vorliegen,
$x_{k|k-1}$ ein geschätzter Zustand zum $k$-ten Zeitpunkt unter Berücksichtigung von Messwerten ist, die bis zu und einschliesslich einem ($k$-1)-ten Zeitpunkt vorliegen,
$S_{k|k-1}$ eine Genauigkeitsmatrix, insbesondere eine inverse Kovarianzmatrix, des geschätzten Zustands zum $k$-ten Zeitpunkt unter Berücksichtigung der Messwerte ist, die bis zu und einschliesslich dem ($k$-1)-ten Zeitpunkt vorliegen,
$y_k$ der Wert eines Vektors der Messwerte zum $k$-ten Zeitpunkt ist,
$h(x)$ eine vektorielle Funktion ist, die aus dem Zustand $x$ einen unverrauschten Ausgang des Systems bestimmt, und
$p_W(\cdot)$ eine Wahrscheinlichkeitsdichte eines Messrauschens ist.

**14.** Einrichtung gemäss Anspruch 13, **dadurch gekennzeichnet, dass** die Einrichtung
einen Genauigkeitsestimator (14) zur Bestimmung eines Masses für die Genauigkeit des geschätzten Zustands,
einen Genauigkeitsprädiktor (16) zur Voraussage eines Masses für die Genauigkeit des vorhergesagten Zustands, und einen Zwischenspeicher (17) zur Speicherung dieser Genauigkeit des vorhergesagten Zustands aufweist.

**15.** Einrichtung gemäss Anspruch 13, **dadurch gekennzeichnet, dass** die Einrichtung
einen Zustandsprädiktor (15) zur Voraussage eines Zustandes, und
einen Zwischenspeicher (17) zur Speicherung dieses vorhergesagten Zustands aufweist.

**Claims**

1. Method for estimating a state of a system, the method being carried out cyclically by virtue of the fact that in a cycle a state estimator (11) determines an estimated state in the form of a state vector with the aid of measured values, with the aid of a measure of the accuracy of the measured values and while observing boundary conditions, and for the purpose of determining the estimated state the state estimator (11) takes account of an estimated state from a preceding cycle, **characterized in that** the state estimator (11) determines the estimated state as

$$\hat{x}_{k|k} := \underset{\{x|g(x)=0\}}{\arg\min} \ (x - \hat{x}_{k|k-1})^{\mathrm{T}} \ S_{k|k-1} \ (x - \hat{x}_{k|k-1}) - \log p_W \ (y_k - h(x))$$

and while observing physical boundary conditions (13) in the form of

$$g(\overset{\wedge}{x}_{k|k}) = 0,$$

where

$\overset{\wedge}{x}_{k|k}$ is the estimated vector state, determined by the state estimator (11), at a $k$th instant taking account of measured values which obtain up to and including the $k$th instant,
$\overset{\wedge}{x}_{k|k-1}$ is an estimated state at the $k$th instant taking account of measured values which obtain up to and including a $(k\text{-}1)$th instant,
$S_{k|k-1}$ is an accuracy matrix, in particular an inverse covariance matrix, of the estimated state at the $k$th instant taking account of the measured values which obtain up to and including the $(k\text{-}1)$th instant,
$y_k$ is a value of a vector of the measured values at the $k$th instant,
$h(x)$ is a vector function which determines a non-noisy output of the system from the state $x$, and
$Pw(\cdot)$ is a probability density of an instance of measuring noise.

2. Method according to Claim 1, **characterized in that** the state estimator (11) takes account of a measure of the accuracy of the estimated state from a preceding cycle.

3. Method according to Claim 1, **characterized in that** an accuracy estimator (14) determines a measure of the accuracy of the estimated state.

4. Method according to Claim 3, **characterized in that** an uncertainty determiner (21) with the aid of the estimated state and of the measure of the accuracy of this estimated state determines a measure of the uncertainty of the estimated state.

5. Method according to Claim 1, **characterized in that** the state estimator [lacuna] 11 [lacuna] determines the estimated state as,

$$\hat{x}_{k|k} := \underset{\{x|g(x)=0\}}{\arg\min} \ (x - \hat{x}_{k|k-1})^{\mathrm{T}} S_{k|k-1} (x - \hat{x}_{k|k-1}) + (y_k - h(x))^{\mathrm{T}} S_W (y_k - h(x))$$

under the boundary condition of

$$g(\overset{\wedge}{x}_{k|k}) = 0,$$

where

$$S_W = \sum_{W}^{-1}$$

is an accuracy matrix of an instance of measuring noise, that is to say an inverse of a covariance matrix of the measuring noise.

6.  Method according to Claim 1, **characterized in that** the estimated state from a preceding cycle is taken into account by using a state predictor (15) to produce a prediction of the current state from this preceding estimated state and from the preceding actuating signals.

7.  Method according to Claim 6, **characterized in that** the state predictor (15) predicts a most probable value $\hat{x}_{k+1|k}$ of the state at a **(k+1)**th instant by calculating

$$\hat{x}_{k+1|k} := f(\hat{x}_{k|k}, u_k)$$

where $f(x_k, u_k)$ is a state mapping which uses a state $x_k$ and an input $u_k$ of the system at a $k$th instant to determine a state $x_{k+1}$ at succeeding **(k+1)**th instant.

8.  Method according to Claim 2, **characterized in that** the measure of the accuracy of the estimated state from a preceding cycle is taken into account by virtue of the fact that an accuracy predictor (16) produces an estimate of the accuracy of a prediction of the state from this preceding measure of the accuracy of the estimated state and from the preceding estimated state.

9.  Method according to Claim 8, **characterized in that** the accuracy predictor (16) determines the accuracy $s_{k+1|k}$ of the prediction of the state from a current estimated state and a measure of the accuracy of the current estimated state by calculating

$$A_k := \nabla f(\hat{x}_{k|k}, u_k),$$

$$Q_k := (S_{k|k} + A_k^T S_v A_k)^{-1}$$

and

$$S_{k+1|k} := S_V - S_V A_k Q_k (S_V A_k)^T$$

where $S_{k+1|k}$ is an accuracy matrix, in particular an inverse covariance matrix of the estimated state at a **(k+1)**th instant, taking account of measured values which obtain up to and including a $k$th instant,
$x_{k|k}$ is an estimated state at the $k$th instant, taking account of the measured values which obtain up to and including the $k$th instant,
$f(x_k, u_k)$ is a state mapping which determines from a state $x_k$ and an input $u_k$ of the system at the $k$th instant a state $x_{k+1}$ at the succeeding ($k$+1)th instant,
$A_k$ is a matrix of the partial derivatives of this state mapping, that is to say the Hesse matrix of $f$ at the point $(x_{k|k}, u_k)$,

$$S_\nu = \Sigma_\nu^{-1}$$

is an accuracy matrix of an instance of process noise, that is to say the inverse of a covariance matrix of the instance of the process noise, and
$S_{k|k}$ is an accuracy matrix, in particular an inverse covariance matrix of the estimated state at the $k$th instant, taking account of the measured values which obtain up to and including the $k$th instant.

10. Method according to Claim 3, **characterized in that** the accuracy estimator (14) determines the measure $S_{k|k}$ of the accuracy of the estimated state from an accuracy predicted in the last cycle, and from a current state by calculating

$$C_k := \nabla h(\hat{x}_{k|k})$$

and

$$S_{k|k} := S_{k|k-1} + C_k^T S_W C_k,$$

$S_{k|k}$ is an accuracy matrix, in particular an inverse covariance matrix of the estimated state at a $k$th instant, taking account of measured values which obtain up to and including a $k$th instant,
$\hat{x}_{k|k}$ is an estimated state at the $k$th instant, taking account of the measured values which obtain up to and including the $k$th instant,
$h(x)$ is a vector function which determines a non-noisy output of the system from the state $x$,
$C_k$ is a matrix of the partial derivatives of this function, that is to say the Hesse matrix of $h$ at the point $(\hat{x}_{k|k})$,

$$S_W = \Sigma_W^{-1}$$

is an accuracy matrix of an instance of measuring noise, that is to say the inverse of a covariance matrix of the instance of the measuring noise, and
$S_{k/k-1}$ is an accuracy matrix, in particular an inverse covariance matrix of the estimated state at the $k$th instant, taking account of the measured values which obtain up to and including the $(k-1)$th instant.

11. Method according to Claim 4, **characterized in that** the uncertainty determiner (21) is performed by determining probability intervals, for example by determining a 95% probability interval for an estimated state $x_{k|k}$ as

$$(\hat{x}_{k|k})_i \pm \frac{2}{\sqrt{(S_{k|k})_i}}$$

where

$S_{k|k}$ is an accuracy matrix, in particular an inverse covariance matrix of the estimated state at the $k$th instant, taking account of measured values which obtain up to and including a $k$th instant,
$(\hat{x}_{k|k})_i$ denotes an ith element of the state vector $x_{k|k}$, and
$(S_{k|k})i$ denotes an ith diagonal element of the accuracy matrix $S_{k|k}$.

12. Method according to Claim 1, **characterized in that** the state estimator (11) also estimates values of unknown parameters of the system, for example measures of accuracy or covariances.

13. Device for estimating a state of a system, which has a state estimator (11) for cyclically determining an estimated state in the form of a state vector, with the aid of measured values, of a measure of the accuracy of the measured values and while observing boundary conditions, and for the purpose of determining the estimated state the state estimator (11) is formed taking account of an estimated state from a preceding cycle, **characterized in that** the state estimator (11) is formed in order to form the estimated state as

$$\hat{x}_{k|k} := \underset{\{x|g(x)=0\}}{\arg\min} \ (x - \hat{x}_{k|k-1})^T \ S_{k|k-1} (x - \hat{x}_{k|k-1}) - \log p_W (y_k - h(x))$$

and while observing physical boundary conditions (13) in the form of

$$g(\hat{x}_{k|k}) = 0,$$

where

$\hat{x}_{k|k}$ is the estimated vector state, determined by the state estimator (11), at a $k$th instant taking account of measured values which obtain up to and including the $k$th instant,
$\hat{x}_{k|k-1}$ is an estimated state at the $k$th instant taking account of measured values which obtain up to and including a $(k-1)$th instant,
$S_{k|k-1}$ is an accuracy matrix, in particular an inverse covariance matrix, of the estimated state at the $k$th instant taking account of the measured values which obtain up to and including the $(k-1)$th instant,
$y_k$ is a value of a vector of the measured values at the $k$th instant,

*h(x)* is a vector function which determines a non-noisy output of the system from the state *x,* and
*Pw(·)* is a probability density of an instance of measuring noise.

14. Device according to claim 13, **characterized in that** the device has
an accuracy estimator (14) for determining a measure of the accuracy of the estimated state,
an accuracy predictor (16) for predicting a measure of the accuracy of the predicted state, and
a buffer (17) for storing this accuracy of the predicted state.

15. Device according to Claim 13, **characterized in that** the device has a state predictor (15) for predicting a state,
and a buffer (17) for storing this predicted state.

**Revendications**

1. Procédé d'évaluation de l'état d'un système, le procédé étant exécuté de manière cyclique, dans lequel un estimateur d'état (11) détermine dans un cycle un état estimé sous la forme d'un vecteur d'état au moyen de valeurs mesurées, au moyen d'une mesure de la précision des valeurs mesurées et en respectant des conditions limites, et l'estimateur d'état (11) tient compte d'un état estimé à partir d'un cycle précédent pour déterminer l'état estimé, **caractérisé en ce que** l'estimateur d'état (11) détermine l'état estimé sous la forme

$$\hat{x}_{k|k} = \arg\min_{(x|g(x)=0)}(x - \hat{x}_{k|k-1})^T S_{k|k-1}(x - \hat{x}_{k|k-1}) - \log p_w(y_k - h(x))$$

et en respectant les conditions limites physiques (13) de la forme $g(\hat{x}_{k|k})$=0 où

$\hat{x}_{k|k}$ est l'état vectoriel estimé déterminé par l'estimateur d'état (11) à un k$^{ième}$ moment en tenant compte des valeurs mesurées présentes jusqu'au k$^{ième}$ moment inclus,
$x_{k|k-1}$ est un état estimé au k$^{ième}$ moment en tenant compte des valeurs mesurées présentes jusqu'à un (k-1)$^{ième}$ moment inclus,
$S_{k|k-1}$ est une matrice de précision, plus particulièrement une matrice de covariance inverse de l'état estimé au k$^{ième}$ moment en tenant compte des valeurs mesurées présentes jusqu'au (k-1)$^{ième}$ moment inclus,
$y_k$ est la valeur d'un vecteur des valeurs mesurées au k$^{ième}$ moment,
*h(x)* est une fonction vectorielle qui est déterminée à partir de l'état x d'une sortie non parasitée du système et $p_w(.)$ est une densité de probabilité d'un bruit mesuré.

2. Procédé selon la revendication 1, **caractérisé en ce que** l'estimateur d'état (11) tient compte d'une mesure de la précision de l'état estimé à partir d'un cycle précédent.

3. Procédé selon la revendication 1, **caractérisé en ce qu'**un estimateur de précision (14) détermine une mesure de la précision de l'état estimé.

4. Procédé selon la revendication 3, **caractérisé en ce qu'**une détermination d'incertitude (21) détermine une mesure de l'incertitude de l'état estimé au moyen de l'état estimé ainsi que de la mesure de la précision de cet état estimé.

5. Procédé selon la revendication 1, **caractérisé en ce que** l'estimateur d'état 11 détermine l'état estimé sous la forme

$$\hat{x}_{k|k} = \arg\min_{(x|g(x)=0)}(x - \hat{x}_{k|k-1})^T S_{k|k-1}(x - \hat{x}_{k|k-1}) + (y_k - h(x))S_w(y_k - h(x))$$

sous la condition limite $g(\hat{x}_{k|k}) = 0$ où

$$S_w = \sum{}_w^{-1}$$

est une matrice de précision d'un bruit mesuré, c'est à dire un inverse d'une matrice de covariance du bruit mesuré.

6. Procédé selon la revendication 1, **caractérisé en ce que** la prise en compte de l'état estimé à partir d'un cycle précédent est réalisée **en ce qu'**un prédicateur d'état (15) génère une prévision de l'état actuel à partir de cet état estimé précédent et à partir des signaux de commande qui précèdent.

7. Procédé selon la revendication 6, **caractérisé en ce que** le prédicateur d'état (15) prédit une valeur probable $\hat{x}_{k+1|k}$ de l'état à un $(k+1)^{\text{ième}}$ moment en calculant $\hat{x}_{k+1|k} = f(x_{k|k}, u_k)$, $f(x_k, u_k)$ étant la représentation d'un état qui détermine un état $x_{k+1}$ à un $(k+1)^{\text{ième}}$ moment suivant à partir d'un état $x_k$ et d'une entrée $u_k$ du système.

8. Procédé selon la revendication 2, **caractérisé en ce que** la prise en compte de la mesure de la précision de l'état estimé à partir d'un cycle précédent est réalisée **en ce qu'**un prédicateur de précision (16) génère une estimation de la précision d'une prévision de l'état à partir de cette mesure précédente de la précision de l'état estimé et à partir de l'état estimé précédent.

9. Procédé selon la revendication 8, **caractérisé en ce que** le prédicateur de précision (16) détermine la précision $S_{k+1|k}$ de la prévision de l'état à partir d'un état estimé actuel et d'une mesure de la précision de l'état estimé actuel en calculant

$$A_k = \nabla f(\hat{x}_{k|k}, u_k),$$

$$Q_k = (S_{k|k} + A_k^T S_v A_k)^{-1},$$

$$S_{k+1|k} = S_v - S_v A_k Q_k (S_v A_k)^T,$$

où $S_{k+1|k}$ est une matrice de précision, plus particulièrement une matrice de covariance inverse de l'état estimé à un $(k+1)^{\text{ième}}$ moment en tenant compte des valeurs mesurées qui sont présentes jusqu'au $k^{\text{ième}}$ moment inclus,
$\hat{x}_{k|k}$ est un état estimé au $k^{\text{ième}}$ moment en tenant compte des valeurs mesurées présentes jusqu'au $k^{\text{ième}}$ moment inclus,
$f(x_k, u_k)$ est la représentation d'un état qui détermine un état $X_{k+1}$ à un $(k+1)^{\text{ième}}$ moment suivant à partir d'un état $x_k$ et d'une entrée $u_k$ du système $A_k$ est une matrice des dérivés partiels de cette représentation d'état, c'est à dire la matrice de Hess de f à l'endroit $(\hat{x}_{k|k}, u_k)$,

$$S_V = \sum{}_V^{-1}$$

est une matrice de précision d'un bruit de processus, c'est à dire un inverse d'une matrice de covariance du bruit de processus, et
$S_{k|k}$ est une matrice de précision, plus particulièrement une matrice de covariance inverse de l'état estimé au $k^{\text{ième}}$ moment en tenant compte des valeurs mesurées qui sont présentes jusqu'au $k^{\text{ième}}$ moment inclus.

10. Procédé selon la revendication 3, **caractérisé en ce que** l'estimateur de précision (14) détermine la mesure $S_{k|k}$ de la précision de l'état estimé à partir d'une précision prédite dans le cycle précédent ainsi qu'à partir d'un état actuel en calculant

$$C_k = \nabla h(\hat{x}_{k|k})$$

et

$$S_{k|k} = S_{k|k\text{-}1} + C_k^T S_w C_k,$$

où $S_{k|k}$ est une matrice de précision, plus particulièrement une matrice de covariance inverse de l'état estimé $\hat{x}$ à un k$^{\text{ième}}$ moment en tenant compte des valeurs mesurées qui sont présentes jusqu'à un k$^{\text{ième}}$ moment inclus, $x_{k|k}$ est un état estimé au k$^{\text{ième}}$ moment en tenant compte des valeurs mesurées présentes jusqu'au k$^{\text{ième}}$ moment inclus,

h(x) est une fonction vectorielle qui détermine une sortie non parasitée du système à partir d'un état x, $C_k$ est une matrice des dérivés partiels de cette fonction, c'est à dire la matrice de Hess de h à l'endroit ($\hat{x}_{k|k}$),

$$S_w = \sum{}_w^{-1}$$

est une matrice de précision d'un bruit de mesure, c'est à dire un inverse d'une matrice de covariance du bruit de mesure, et

$S_{k|k\text{-}1}$ est une matrice de précision, plus particulièrement une matrice de covariance inverse de l'état estimé au k$^{\text{ième}}$ moment en tenant compte des valeurs mesurées qui sont présentes jusqu'à un (k-1)$^{\text{ième}}$ moment inclus.

**11.** Procédé selon la revendication 4, **caractérisé en ce que** la détermination d'incertitude (21) est réalisée en déterminant des intervalles de probabilité, par exemple en déterminant un intervalle de probabilité de 95 % pour un état estimé $x_{k|k}$ sous la forme

$$(\hat{x}_{k|k})_i \pm \frac{2}{\sqrt{(S_{k|k})_i}},$$

où

$S_{k|k}$ est une matrice de précision, plus particulièrement une matrice de covariance inverse de l'état estimé au k$^{\text{ième}}$ moment en tenant compte des valeurs mesurées qui sont présentes jusqu'à un k$^{\text{ième}}$ moment inclus, $(\hat{x}_{k|k})_i$ désigne un i$^{\text{ième}}$ élément du vecteur d'état $x_{k|k}$, et $(S_{k|k})_i$ désigne un i$^{\text{ième}}$ élément diagonal de la matrice de précision $S_{k|k}$.

**12.** Procédé selon la revendication 1, **caractérisé en ce que** l'estimateur d'état (11) estime également les valeurs des paramètres inconnus du système, par exemple des mesures des précisions ou des covariances.

**13.** Dispositif d'évaluation de l'état d'un système, lequel présente un estimateur d'état (11) pour déterminer de manière cyclique un état estimé sous la forme d'un vecteur d'état au moyen de valeurs mesurées, d'une mesure de la précision des valeurs mesurées et en respectant des conditions limites, et l'estimateur d'état (11) est configuré de manière à tenir compte de l'état estimé à partir d'un cycle précédent pour déterminer l'état estimé, **caractérisé en ce que** l'estimateur d'état (11) est configuré pour former l'état estimé sous la forme

$$\hat{x}_{k|k} = \underset{(x|g(x)=0)}{\arg\min}(x - \hat{x}_{k|k-1})^T S_{k|k-1}(x - \hat{x}_{k|k-1}) - \log p_w(y_k - h(x))$$

et en respectant les conditions limites physiques (13) de la forme $g(\hat{x}_{k|k})=0$ où

$\hat{x}_{k|k}$ est l'état vectoriel estimé déterminé par l'estimateur d'état (11) à un k$^{\text{ième}}$ moment en tenant compte des valeurs mesurées présentes jusqu'au k$^{\text{ième}}$ moment inclus, $x_{k|k\text{-}1}$ est un état estimé au k$^{\text{ième}}$ moment en tenant compte des valeurs mesurées présentes jusqu'à un (k-1)$^{\text{ième}}$ moment inclus, $S_{k|k\text{-}1}$ est une matrice de précision, plus particulièrement une matrice de covariance inverse de l'état estimé au k$^{\text{ième}}$ moment en tenant compte des valeurs mesurées présentes jusqu'au (k-1)$^{\text{ième}}$ moment inclus, $y_k$ est la valeur d'un vecteur des valeurs mesurées au k$^{\text{ième}}$ moment,

*h(x)* est une fonction vectorielle qui est déterminée à partir de l'état x d'une sortie non parasitée du système, et $p_w(.)$ est une densité de probabilité d'un bruit mesuré.

14. Dispositif selon la revendication 13, **caractérisé en ce que** le dispositif présente un estimateur de précision (14) pour déterminer une mesure de la précision de l'état estimé, un prédicateur de précision (16) pour prédire une mesure de la précision de l'état prédit, et une mémoire intermédiaire (17) pour mémoriser cette précision de l'état prédit.

15. Dispositif selon la revendication 13, **caractérisé en ce que** le dispositif présente un prédicateur d'état (15) pour prédire un état, et une mémoire intermédiaire (17) pour mémoriser cet état prédit.

**Fig. 1**

**Fig. 2**

**Fig. 3**

**Fig. 4**

**Fig. 5**